Europäisches Patentamt

European Patent Office

Office européen des brevets

(19)

(11) **EP 1 528 489 A1**

(12) **EUROPEAN PATENT APPLICATION**

(43) Date of publication:
**04.05.2005 Bulletin 2005/18**

(51) Int Cl.⁷: **G06F 17/60**, G06F 7/24

(21) Application number: **03020680.9**

(22) Date of filing: **11.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **SAP Aktiengesellschaft**
**69190 Walldorf (DE)**

(72) Inventors:
• **Albert, Beate**
  **69234 Dielheim (DE)**

• **Kind, Jürgen**
  **76684 Östringen (DE)**
• **Pak, Igor**
  **68199 Mannheim (DE)**
• **Scherberger, Günter**
  **79211 Denzlingen (DE)**

(74) Representative:
**Richardt, Markus Albert, Dipl.-Ing. et al**
**Leergasse 11**
**65343 Eltville am Rhein (DE)**

(54) **A financial data evaluation method**

(57) A method and system are provided for evaluating financial information, the disclosure including computational/evaluation capability for processing of data sets. In one of the implementations, the invention is utilized in an asset accounting. The calculation module is provided which includes an evaluation engine which operates internally on flat, generic data structure that is independent of the particular application. Externally-defined data structure of the data set is mapped onto the internal data structure. A rules-based modules provide information related to the client defined rules. A user interface enables a user to receive back the evaluated financial information, for a specified time period, the financial information being responsive to an original user request entered via the user interface. As such, the evaluation engine can be reused in a variety of different applications.

FIG.1

**Description**

**Field of the invention.**

The present invention relates in general to a data evaluation system and, in particular, to a financial system that uses an encapsulated engine to perform evaluation and calculation of data sets.

**Background and prior art**

The developers of the computer systems or programs for the increasingly complex financial environment need to take into consideration an array of different factors. Thus, any newly developed system or program that aims at effectively dealing with the challenges of the financial/accounting sector is typically developed on a case-by-case basis, and is limited to the specific application for which it was developed.

In recent years, programmers have devoted considerable effort to developing programs that are somewhat adaptable to different situations so as to reduce the need to create and reprogram source code. Accordingly such engines, although perhaps providing significant adaptability, are still application-specific engines and would require substantial code revision to be re-used in other applications.

The specific business environments for which the financial programs are developed are as varied as the companies and industries in which they exist. The differences include, for example, country-related factors and industry-related factors.

The country-related factors include various legal environments, for example, different tax laws; or different accounting methods, for example, 'declining balance method' used in Japan and Korea or depreciation on the group asset level used in the USA.

Industry-related factors relate to the way assets are accounted for in different industries and the available business records. Often, the usage of accounting information may be provided in an industry standard or proprietary format. Accordingly, accounting, as well as, financial programs are generally designed on a case-by-case basis to handle particular types of data and specific data structures.

In order to deal with multiple influence factors, ready-made financial programs are usually inadequate and companies decide to custom-design programs for particular applications so as to support externally-defined data according to client-defined rules. However, the process of developing custom code on a per application basis is expensive, disruptive to the company's business, and unreliable. Significant company resources are often devoted to educating the developers, providing test data, analysing the test results and troubleshooting the program. In addition, due to the complexity of developing custom code from basic principles the resulting programs are prone to errors or inadequate performance and may take significant time to develop into satisfactory products.

**Summary of the invention**

The present invention addresses the need for flexible and reliable financial calculation/evaluation system that would support externally-defined data structures of various business environments and data handling according to client-defined rules. In particular, the system of the present invention includes encapsulated calculation/evaluation engine that works independently of application-specific data structures. Thus, development time frames are substantially reduced with corresponding cost savings, and system reliability is greatly enhanced, due to the ability to reuse the generalized platform.

According to various embodiments of the data calculation/evaluation system disclosed herein, a method of processing data sets is described. Data sets comprising financial data, each data set having at least a posting date and each data set being indicative of a financial evaluation rule are received from an external application database. The data sets are sorted by posting date to provide an ordered sequence of data sets.

Then, an initial segment covering a time span from the posting date of the initial data set of the sequence to the end date is created. Subsequently, an ordered sequence of data sets is processed by the engine, adding a consecutive data set of the sequence to the initial segment if the consecutive data set has the same posting date and financial evaluation rule as the first data set, otherwise, splitting of the initial segment into first and second segments. Loop processing of further consecutive data sets of the ordered sequence follows, wherein adding occurs when a consecutive data set matches an initial data set; and splitting of the initial segment into first and second segments occurs, in case the posting date of the consecutive data set is not the same as the first data set, the first segment covering a time span between initial posting and consecutive posting date and second segment covering a time span between consecutive posting date and the end date, or said splitting also occurs in case the posting date of the consecutive data set is the same but consecutive data set comprises different financial evaluation rule.

**Brief description of the drawings**

Figure 1    is a block diagram illustrating a data evaluation system for processing of the data sets comprising financial data of the present invention.

Figure 2    is a flowchart of a process describing a method of the present invention.

Figure 3    is a more detailed flowchart of a process describing a method of the present invention.

Figure 4    is a block diagram of a more detailed embodiment of the data evaluation system for processing of the data sets comprising financial data of the present invention.

**Detailed description**

The claimed invention is applicable to many different industries. One skilled in the art will appreciate that the various embodiments and concepts of the present invention are applicable to plurality of industries without straying from the spirit of the present invention.

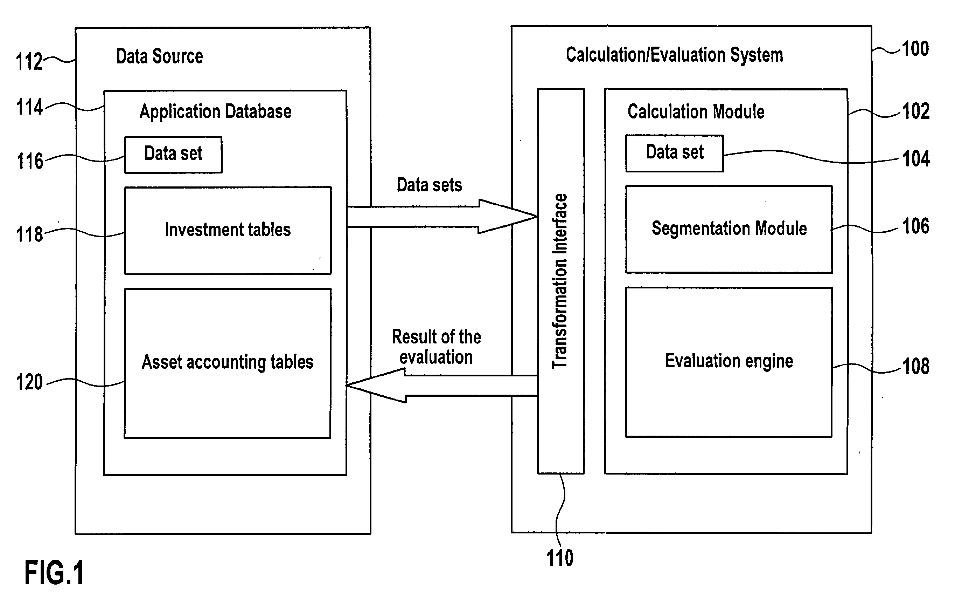

Figure 1 illustrates a data calculation/evaluation system 100 for processing of the data sets comprising financial data 116 according to a preferred embodiment of the present invention. Data sets comprising financial data, each data set having at least a posting date and each data set being indicative of a financial evaluation rule are transferred to a data calculation/evaluation system 100 for processing via the interface 110 from an external application database 114 of the data source 112.

According to the embodiment of the present invention the data sets comprising financial data can be coming from the investment database 118, if future investments need to be evaluated and planned or from the asset accounting module 120 if the initial request includes calculation of such values as, for example, depreciation, interest or revaluation. Next, a user specifies an evaluation period by entering an end date.

Externally-defined data structure of the data set is mapped onto the internal data structure and the transformation of application-specific data structure into the flat, generic data structure takes place. Subsequently, an evaluation system 100 determines the start and the end period as requested by the user and accordingly an initial segment covering a time span from the posting date of the initial data set of the sequence to the end date is created.

Next, the data sets 104 are sorted by posting date to provide an ordered sequence of data sets which is then processed by the evaluation engine 108, adding a consecutive data set of the sequence to the initial segment if the consecutive data set has the same posting date and financial evaluation rule as the first data set, otherwise, splitting of the initial segment into first and second segments. Creating, of segments, determining of appropriate segment, and splitting or updating of segments takes place in the segmentation module 106. Calculation of the requested amounts with the use of the implemented algorithm is performed by calculation module 102.

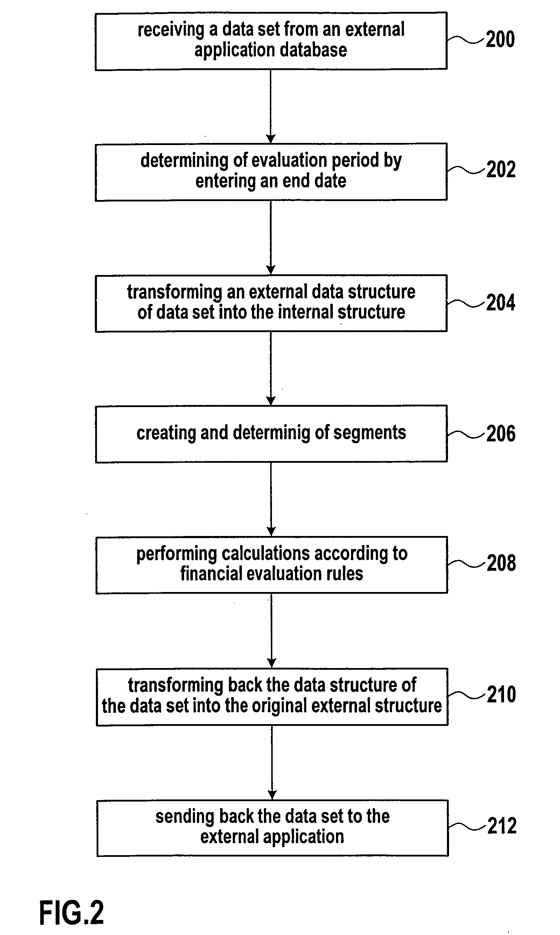

Figure 2 depicts a corresponding high level flow chart. In the step 200 data sets comprising financial data, each data set having at least a posting date and each data set being indicative of a financial evaluation rule are received from an external application database. In the Step 202 the user enters an end date. In the next step 204 an external application-specific data structure of the data set is mapped onto the internal structure and the structure is transformed.

Subsequently, the creation and determination of segments 206 follows. In this step, the posting dates representative of changes are identified and the evaluation engine determines how those changes relate to the initial segment. In the step 208, calculations according to financial evaluation rules are performed. Then, the structure of the data sets is transformed back into the original, application-specific structure (210) and in the last step, 212 the data sets are send back to the application.

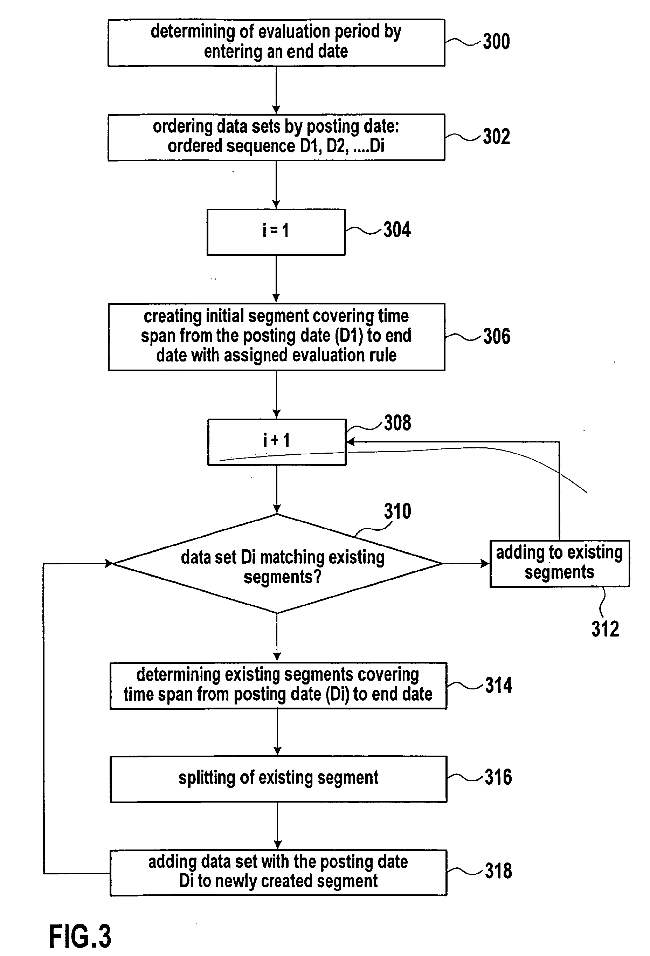

Figure 3 illustrates a more detailed flowchart of a process describing a method of the present invention. Step 300 permits flexible determining of evaluation period by entering of an end date by the user. In the step 302, data sets are ordered by the posting date into the ordered sequence D1, D2,...Di where i equals to one (304). In the subsequent step, 306 initialisation takes place: initial segment covering time span from the posting date (D1) to end date with the assigned evaluation rule is created. The following step, 308 represents incrementing or loop processing of the data sets.

Each time the evaluation is performed and the decision is made if data set Di matches an existing segments 310, if yes, the consecutive data set is added to the existing segment 312, however, in case the consecutive data set does not match an existing segment, the existing segments covering the posting date Di are determined 314 - from the perspective of posting date representing the change and from the perspective of matching financial evaluation rules. If the data set Di does not fit the previous segment, it is split into the two consecutive segments 316. Also, if the posting date representing the change does fit the initial segment, however, the financial evaluation rules are different, in this case the previous segment is split into the two new segments as well 316. Finally, if the change fits the initial segment, data set is added to newly created segment 318.

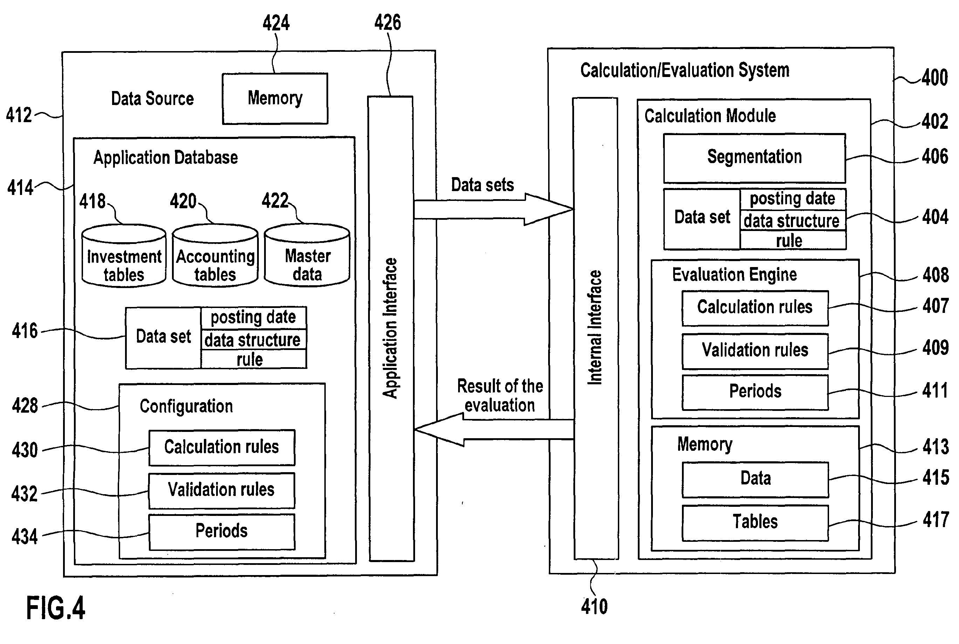

Figure 4 illustrates a more detailed description of the evaluation system of the present invention, describing a case according with the preferred embodiment where data sets 416 are received from an external application database 414 of the data source 412. The data sets are received from the investment database 418 if future investments need to be evaluated and planned and from asset accounting database 420 if the initial request includes calculation of such values as, for example, depreciation, interest or revaluation (inflation). The data sets are received via application interface 426.

The received data sets comprise financial data, each data set having at least a posting date and each data set being indicative of a financial evaluation rule. Nevertheless, the data sets coming from the external applications have application-specific data structure, since calculation/evaluation system 400 of the present invention works with generic, flat data structure, externally-defined data structure of the data set is mapped onto the internal data structure of the data set 404 and the data set 416 is transformed using the internal interface 410. The transformation takes place in the main memory 413. The data set 404 has an application-independent data structure, having also at least a posting date and each data set being indicative of a financial evaluation rule.

The set of financial rules used by the calculation/evaluation system contains validation rules 409, 432, calculation rules 407, 430 and definitions of periods 411, 434. The set of rules used in the present invention is partially client-defined such as external validation rules 432, calculation rules 430, and specific periods 434; and also comprises of the internal rules such as validation rules 409, calculation rules 407 and periods definitions 411.

Validation rules 409 allow validating of the data against the master files or tables. It is first determined whether the received value(s) should be checked.

Then, the received data is checked using the Boolean logic. The examples include: specification of the maximum possible depreciation; use of constrains including the use of the negative values etc.

Calculation rules 407 include the determination of the base value for the considered period where it is specified if the calculation has to be of the type arithmetic, geometric or similar, as well as the calculation factor where the type of the calculation method is taken into consideration including for example: linear, stated percentage, declining, country specific, customer specific or other.

Period determination through the use of the period factor comprises also a part of the evaluation engine 408, it needs to be determined in this case if the user needs the calculation to be done on the basis of days, weeks or months or if some other standard needs to be used, for example 13 periods for a fiscal year. Also period weighting can be used, where for example, an additional weight can be added if the multiple-shifts were used in a specific period.

Subsequently, an evaluation system 400 determines the start and the end period as requested by the user and accordingly an initial segment covering a time span from the posting date of the initial data set of the sequence to the end date is created. Next, the data sets 404 are sorted by posting date to provide an ordered sequence of data sets. An ordered sequence of data sets in then processed by the evaluation engine 408, adding a consecutive data set of the sequence to the initial segment if the consecutive data set has the same posting date and financial evaluation rule as the first data set, otherwise, splitting of the initial segment into first and second segments. Creating, of segments, determining of appropriate segment, and splitting or updating of segments takes place in the segmentation module 406.

Before the calculation can be performed, it needs to be determined which master data 422 and which Configuration data 428 is required for the calculation.

When the evaluation engine has the necessary data and the financial rules, the calculation module 402 performs a computation using the following formula: amount = period factor * base value * calculation factor. The process of computing continues until the ordered sequence is not empty by looping at the determined periods. The results of the calculations are stored in the memory 413 as data 415 or in the form of tables 417. Then, they are returned to the application after transforming back the generic data structure of the data sets back into the application-specific data structure. The results are stored in the application memory 424 unless the user specifies that the results should be stored permanently.

Following example from the Asset Accounting illustrates calculation method of the present invention:

According to the implemented algorithm of the calculation/evaluation program, the required amount is not calculated for each change separately. Instead, the amount is calculated by taking into account all changes, which are relevant for the considered time period.

There are two changes on a fixed asset: an acquisition of 100.000 on the 01.01.2003, and a transfer of 20.000 on the 01.07.2003. The depreciation amount is calculated as 10% of the acquisition and production costs per year. One period is equal to one calendar month.

In the first step, the depreciation amount is calculated for the first 6 months, taking into account the acquisition in the period 1:

$$100.000 * 10\% * 6 / 12 = 5.000-$$

In the next step, the amount will be calculated for the last 6 months, taking into account both the acquisition and the transfer:

$$(100.000 + 20.000) * 10\% * 6 / 12 = 6.000-$$

The total depreciation amount is the sum: -5.000 -6.000 = 11.000- In the current program, the depreciation amount on the first acquisition is calculated for the 12 months:

$$100.000 * 10\% * 12 / 12 = 10.000-$$

Depreciation amount on the transfer is calculated for the last 6 months:

$$20.000 * 10\% * 6 / 12 = 1.000-$$

The total depreciation amount is the sum: -10.000 -1.000 = 11.000-

The application-independent data structure is flat allowing the calculations to be performed quickly and very precisely:

| No. | Start | Value | Duration | Percentage | End | Depreciation |
|---|---|---|---|---|---|---|
| 1 | 01.01.2003 | 100.000 | 10 | 10% | 30.06.2003 | -5.000 |
| 2 | 01.07.2003 | 20.000 | 10 | 10% | 31.12.2003 | -6.000 |

After the calculations are performed, the structure of the data sets is transformed back into the original, application-specific structure and the results are not stored in the database but they are send back to the application as an accumulated result.

Although the present invention has been described in detail with reference to certain preferred versions thereof, other versions are possible. Therefore the spirit and scope of the appended claims should not be limited to the preferred versions herein.

List of Reference Numerals

100   Calculation/evaluation system

102   Calculation module

104   Data set

106   Segmentation module

108   Evaluation engine

110   Transformation interface.

112   Data source

114   Application database

116    Data set

118    Investment tables

120    Asset accounting tables

400    Calculation/evaluation system

402    Calculation module

404    Data set with posting date, data structure and a rule

406    Segmentation module

407    Calculation rules

408    Evaluation engine

409    Validation rules

410    internal interface

411    Periods

412    Data source

413    Memory

414    Application database

415    Data

416    Data set

417    Tables

418    Investment tables

420    Accounting tables

422    Master data

424    Memory

426    Application interface

428    Configuration

430    Calculation rules

432    Validation rules

434    Periods

**Claims**

**1.**  A method of evaluating a financial data comprising the steps of:

a) receiving data sets comprising financial data, each data set having at least a posting date and each data set being indicative of a financial evaluation rule,

b) specifying of an evaluation period by entering an end date,

c) sorting of the data sets by posting data to provide an ordered sequence of data sets,

d) creating an initial segment covering a time span from the posting date of the initial data set of the sequence to the end date,

e) adding a consecutive data set of the sequence to the initial segment if the consecutive data set has the same posting date and financial evaluation rule as the first data set, and otherwise,

f) splitting of the initial segment into first and second segments,

g) processing of further consecutive data sets of the ordered sequence, wherein said adding occurs when a consecutive data set matches an initial data set; and said splitting of the initial segment into first and second segments occurs, in case the posting date of the consecutive data set is not the same as the first data set, the first segment covering a time span between initial posting and consecutive posting date and second segment covering a time span between consecutive posting date and the end date, or said splitting also occurs in case the posting date of the consecutive data set is the same but consecutive data set comprises different financial evaluation rule,

h) performing evaluation of the segments.

2. The method of claim 1, wherein, the evaluated data set comprises an internal data structure independent from the data base structures used in other applications.

3. The method of claim 2, wherein said internal data structure comprises at least one data field with information identifying the status of financial scenario.

4. The method of claim 1, wherein evaluation of a data set further comprises calculation using an algorithm for the determined linear segment.

5. The method of claim 1, wherein evaluating financial data includes investment simulations.

6. The method of claim 1, wherein the said algorithm is designed to perform calculations of the required amounts simultaneously for all relevant postings in each period.

7. A computer system for evaluating financial data, the system comprising: an evaluation engine, including a plurality of financial evaluation rules, communicating with an application through an interface, wherein the evaluation engine is configured to receive a periodic data sets representative of financial information, wherein an evaluation engine comprises of a memory; a processing unit; and a software routine stored in the memory and adapted to be executed on the processing for evaluation of received data sets.

8. The computer system of claim 7, the said system further comprising:

a) means for receiving data sets (116;416) comprising financial data, each data set having at least a posting date and each data set being indicative of a financial evaluation rule,

b) means for specifying of an evaluation period by entering an end date,

c) means for sorting of the data sets by posting data to provide an ordered sequence of data sets,

d) means for creating an initial segment covering a time span from the posting date of the initial data set of the sequence to the end date,

e) means for adding a consecutive data set of the sequence to the initial segment if the consecutive data set has the same posting date and financial evaluation rule as the first data set, and otherwise,

f) means for splitting of the initial segment into first and second segments,

g) means for processing of further consecutive data sets (104; 404) of the ordered sequence, wherein said adding occurs when a consecutive data set matches an initial data set; and said splitting of the initial segment into first and second segments occurs, in case the posting date of the consecutive data set is not the same as the first data set, the first segment covering a time span between initial posting and consecutive posting date and second segment covering a time span between consecutive posting date and the end date, or said splitting also occurs in case the posting date of the consecutive data set is the same but consecutive data set comprises different financial evaluation rule,

h) means for performing evaluation of the segments (108; 408).

**9.** The computer system of claim 7 or 8, the said system designed to enable the user to select a flexible period for which a processing is required.

**10.** The computer system of claim 7, 8 or 9, wherein the financial rules are predetermined.

**11.** A computer-readable storage medium holding code for performing the steps of:

a) receiving data sets comprising financial data, each data set having at least a posting date and each data set being indicative of a financial evaluation rule,
b) specifying of an evaluation period by entering an end date,
c) sorting of the data sets by posting data to provide an ordered sequence of data sets,
d) creating an initial segment covering a time span from the posting date of the initial data set of the sequence to the end date,
e) adding a consecutive data set of the sequence to the initial segment if the consecutive data set has the same posting date and financial evaluation rule as the first data set, and otherwise,
f) splitting of the initial segment into first and second segments,
g) processing of further consecutive data sets of the ordered sequence, wherein said adding occurs when a consecutive data set matches an initial data set; and said splitting of the initial segment into first and second segments occurs, in case the posting date of the consecutive data set is not the same as the first data set, the first segment covering a time span between initial posting and consecutive posting date and second segment covering a time span between consecutive posting date and the end date, or said splitting also occurs in case the posting date of the consecutive data set is the same but consecutive data set comprises different financial evaluation rule,
h) performing evaluation of the segments.

FIG.1

EP 1 528 489 A1

receiving a data set from an external
application database — 200

determining of evaluation period by
entering an end date — 202

transforming an external data structure
of data set into the internal structure — 204

creating and determinig of segments — 206

performing calculations according to
financial evaluation rules — 208

transforming back the data structure of
the data set into the original external structure — 210

sending back the data set to the
external application — 212

# FIG.2

```
┌─────────────────────────────────────┐
│  determining of evaluation period by │ ～300
│        entering an end date          │
└─────────────────────────────────────┘
                  │
                  ▼
┌─────────────────────────────────────┐
│   ordering data sets by posting date:│ ～302
│     ordered sequence D1, D2, ....Di  │
└─────────────────────────────────────┘
                  │
                  ▼
        ┌──────────────────┐
        │      i = 1        │ ～304
        └──────────────────┘
                  │
                  ▼
┌─────────────────────────────────────┐
│   creating initial segment covering  │
│   time span from the posting date    │ ～306
│  (D1) to end date with assigned      │
│          evaluation rule             │
└─────────────────────────────────────┘
                  │
                  ▼
        ┌──────────────────┐ ～308
        │      i + 1       │◄─────────────┐
        └──────────────────┘              │
                  │                        │
                  ▼                        │
              ╱───────╲  310               │
            ╱  data set ╲                  │  ┌──────────────────┐
          ╱  Di matching  ╲────────────────┼─►│ adding to existing│
          ╲   existing     ╱               │  │     segments     │
            ╲ segments?   ╱                │  └──────────────────┘
              ╲─────────╱                  │          │
                  │                        │         312
                  ▼                        │
┌─────────────────────────────────────┐   │
│   determining existing segments      │ ～314
│   covering time span from posting    │   │
│       date (Di) to end date          │   │
└─────────────────────────────────────┘   │
                  │                        │
                  ▼                        │
┌─────────────────────────────────────┐   │
│     splitting of existing segment    │ ～316
└─────────────────────────────────────┘   │
                  │                        │
                  ▼                        │
┌─────────────────────────────────────┐   │
│  adding data set with the posting    │ ～318
│  date Di to newly created segment    │
└─────────────────────────────────────┘
```

## FIG.3

FIG.4

EP 1 528 489 A1

# EP 1 528 489 A1

**European Patent Office**

## EUROPEAN SEARCH REPORT

Application Number

EP 03 02 0680

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 587 628 A (ARCHER GARY D  ET AL) 6 May 1986 (1986-05-06) * abstract; claims 1-4 * | 1-11 | G06F17/60 G06F7/24 |
| X | US 2001/014880 A1 (BUCINELL GERALD D  ET AL) 16 August 2001 (2001-08-16) * the whole document * | 1-11 | |
| X | EP 0 450 825 A (OLAN MICHAEL J ;SAMPSON WESLEY C (US)) 9 October 1991 (1991-10-09) * page 1 - page 5; claims 1-16 * | 1-11 | |
| X | US 5 855 016 A (LARY RICHARD FRANKLIN  ET AL) 29 December 1998 (1998-12-29) * claim 2 * | 1-11 | |
| X | EP 0 317 530 A (IBM) 24 May 1989 (1989-05-24) * claims 1-7 * * abstract * | 1-11 | |
| X | US 5 583 759 A (GEER TERRY L) 10 December 1996 (1996-12-10) * column 2, line 50 - column 4, line 52; figures 1,2 * | 1-11 | TECHNICAL FIELDS SEARCHED (Int.Cl.7) G06F |
| X | US 5 117 495 A (LIU PETER) 26 May 1992 (1992-05-26) * abstract * * figures 1,2 * | 1-11 | |
| X | US 6 519 593 B1 (MATIAS YOSSI  ET AL) 11 February 2003 (2003-02-11) * claims 1-5 * | 1-11 | |

-----

The present search report has been drawn up for all claims

| Place of search | Date of completion of the search | Examiner |
|---|---|---|
| MUNICH | 19 February 2004 | Lavin Liermo, J |

EPO FORM 1503 03.82 (P04C01)

**EP 1 528 489 A1**

## ANNEX TO THE EUROPEAN SEARCH REPORT
## ON EUROPEAN PATENT APPLICATION NO.

EP 03 02 0680

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2004

| Patent document cited in search report | | Publication date | Patent family member(s) | | Publication date |
|---|---|---|---|---|---|
| US 4587628 | A | 06-05-1986 | DE | 3486267 D1 | 03-03-1994 |
| | | | DE | 3486267 T2 | 30-06-1994 |
| | | | EP | 0144792 A2 | 19-06-1985 |
| | | | JP | 2033821 C | 19-03-1996 |
| | | | JP | 7060380 B | 28-06-1995 |
| | | | JP | 60176143 A | 10-09-1985 |
| US 2001014880 | A1 | 16-08-2001 | NONE | | |
| EP 0450825 | A | 09-10-1991 | US | 5212639 A | 18-05-1993 |
| | | | CA | 2035953 C | 25-04-1995 |
| | | | DE | 69127847 D1 | 13-11-1997 |
| | | | DE | 69127847 T2 | 20-05-1998 |
| | | | EP | 0450825 A2 | 09-10-1991 |
| | | | JP | 2665407 B2 | 22-10-1997 |
| | | | JP | 5101103 A | 23-04-1993 |
| | | | US | 5390113 A | 14-02-1995 |
| US 5855016 | A | 29-12-1998 | US | 5349684 A | 20-09-1994 |
| | | | JP | 2040458 C | 28-03-1996 |
| | | | JP | 3129426 A | 03-06-1991 |
| | | | JP | 7076906 B | 16-08-1995 |
| EP 0317530 | A | 24-05-1989 | US | 4873625 A | 10-10-1989 |
| | | | EP | 0317530 A2 | 24-05-1989 |
| | | | JP | 1161527 A | 26-06-1989 |
| US 5583759 | A | 10-12-1996 | US | 5930778 A | 27-07-1999 |
| US 5117495 | A | 26-05-1992 | NONE | | |
| US 6519593 | B1 | 11-02-2003 | NONE | | |

EPO FORM P0459

For more details about this annex : see Official Journal of the European Patent Office, No. 12/82

14